# EUROPEAN PATENT APPLICATION

(11) **EP 4 614 475 A1**
(43) Date of publication of application: **10.09.2025**
(21) Application number: 24315081.0
(22) Date of filing: 05.03.2024
(51) Int. Cl.: G08B 21/22, G08B 21/24, G06N 3/049

(54) **CHILD PRESENCE DETECTION**

(71) Applicant: IMRA Europe S.A.S., 06904 Sophia Antipolis (FR)
(72) Inventor: Fujita, Takeshi, Fukuoka (JP); Nakano, Yuta, 06560 Valbonne (FR); Bendahan, Rémy, 06160 Juan Les Pins (FR)
(74) Representative: Novagraaf International SA

(57) **Abstract**

A computer-implemented method for detecting at least one object or at least one person in a monitored area of a monitoring device,
the method comprising the steps of :
- detecting a trigger activation (S1), such as a closing of a door of a vehicle,
- receiving signal data (S2) from the monitoring device,
- composing time series data (S3) based on the signal data received,
- extracting times series features (S4) from the time series data,
- identifying an evolution of times series features over a predetermined period of time starting with the detected trigger activation,
- detecting (S5) the at least one object or the at least one person based on the evolution of times series features.

## Description

The present invention relates to the field of method for detecting objects in monitored areas, in particular for detecting child presence in a vehicle.

Methods for detecting objects in monitored areas are known in the art, in particular methods using neural networks.

The document PTL1 - US20230138431A1 discloses systems and methods for driver warnings upon child identification and bypass options based on gesture and posture detection.

PTL 1 relates to image based child protection system that gives warning to driver when a child is left out inside car. One aim is how to activate and disactivate the system. The method is directed to image processing for gesture recognition. Image sensor is one of the general sensors installed inside or outside car, and in addition to that, in terms of image processing technology, the gesture recognition is a mature technology generally speaking.

If target user is the driver (person who activates this system), there is no mention about the case that the user forgets to activate the system. Depending on the gesture recognition method, it might be possible that a child left in the car can disactivate the system. It means, there are several points to be improved. Further, this prior art is limited to image sensor. It is therefore desirable to come up with alternatives.

The document PTL2 - CN214823128U discloses a safety alarm for children in vehicle.

PTL2 describes child safety system by using multiple sensors. The sensors described are gravity sensor, hall sensor, temperature sensor and the like. These sensors are connected to control centre or device in charge of data processing or monitoring. Eventually, this system recognizes if a child is in a normal status or not, by seeing sensor values.

PTL2 does not describe any detail about how to judge if a child is safe.

The document PTL3 - US20220308195A1 discloses a method, an apparatus, and a system for wireless sensing based on channel information.

System for passenger, especially a child, detection by using radar sensor is described in PTL3. One of the points in terms of technology is to use the data acquired from receivers of radar sensor. Toward the acquired data, PTL3 applies projection techniques such as PCA (Principal Component Analysis), which is one of the conventional dimension reduction/feature extraction methods. Then, the extracted features are feed to a discriminator.

Latter part of processing for feature projection and discrimination uses methods which are generic. In addition to that, there is no technical remarks about time series features and processing. PTL3 uses radar data with traditional discrimination methods.

The document PTL4 - US20200406860A1 discloses a method, an apparatus, and a system for vehicle wireless monitoring.

PTL4 is directed to automotive application especially subtle motion detection such as breath of child, pet and the like. In terms of technology, it uses multiple sensors with interrelated connections. By coupling sensors, it is possible to see difference between a radar wave emitted from one device and a reflected wave received even by another sensor. The difference is important to capture a slight movement of passenger or object.

It seems possible to separate transmitter and receiver as different devices.

That is, the drawbacks are that these prior arts do not achieve better performance compared with other conventional approaches in terms of signal processing. In fact, by changing sensor installation (use multi sensors, etc), it is possible to improve the sensitivity in terms of data acquisition. However, these prior arts are silent about signal processing improvement.

In view of the prior art, there is a need for overcoming the mentioned drawbacks and to improve the recognition or detection accuracy, while simplifying and limiting the effort to achieve the same. There is a need for reducing the computational effort and time, and limiting resources.

Thereby, an aim of the present invention is to overcome the disadvantages of the prior arts mentioned, and in particular to improve the recognition or detection accuracy, while simplifying and limiting the effort to achieve the same. We use time series data and its features, especially the evolution of time series features for improving detection or recognition performance. This technology can deal with not only raw data, but also data after filtering and so on.

A first aspect of the present invention relates to a computer-implemented method for detecting at least one object or at least one person in a monitored area of a monitoring device,
the method comprising the steps of :
- detecting a trigger activation, such- as a closing of a door of a vehicle,
- receiving signal data from the monitoring device,
- composing time series data based on the signal data received,
- extracting times series features from the time series data,
- identifying an evolution of times series features over a predetermined period of time starting with the detected trigger activation,
- detecting the at least one object or the at least one person based on the evolution of times series features.

This allows to overcome the disadvantages of the prior arts mentioned, and in particular to improve the recognition or detection accuracy, while simplifying and limiting the effort to achieve the same We use time series data and its features, especially the evolution of time series features for improving detection or recognition performance. This also avoid redundancy. This allows to provide an improved method with more accuracy and improved speed, with a simplified construction. Signal data is data received from at least one sensor arranged to monitor the monitored area. In other words, signal data is sensor data.

With respect to PTL1 mentioned above, this prior art relates to the activation of a system by gesture recognition on image data. This technology is too general. Actually, there is no technical or child detection presence specific description that struggles with the issue appeared in inside vehicle situation.

In contrast, the present invention is directed to activation of a system, with a trigger. As we use information about vibration of object, out target trigger is the action who generate the vibration. Therefore, there is no risk of forgetting the activation of the system by the user.

With respect to PTL2 mentioned above, PTL2 use multiple sensors to monitor a child, however, there is no clear features of how to recognize a child, how to see his status, etc. There is no description specific to child presence detection or inside vehicle issue.

In contrast, the present invention concretely uses sensors in the system, and the target sensor is different from PTL2.

With respect to PTL3 mentioned above, PTL3 describes to use radar data from receivers, then to extract features by using projection techniques such as PCA (Principal Components Analysis), finally to discriminate a child inside car. In terms of processing, all methods from PTL3 are known. There is no special disclosure about time series data processing in PTL3 directed to child presence detection.

In contrast, from technical (algorithmic) point of view, the point of the present invention is to use time series features, especially the feature change with passing of time. In PTL3, this point is not included at all.

With respect to PTL3 mentioned above, PTL4 discloses to couple multiple sensors, especially, it allows to install emitter and receiver as different devices. In radar sensor, wave signal reaches widely by reflection, it is possible to call it "multi pass". PTL4 captures special multi pass by separating devices.

In contrast, first of all, the present invention, do not use multiple sensors with synchronization. Then, in terms of time series feature extraction, in the present invention, there is a focus on the change of features with passing of time, especially, attenuation of wave. PTL4 uses conventional features and there is no feature specific to child presence detection application.

The invention can also be defined according to the following features, taken individually or in combination.

Advantageously, the method further comprises the step of:
- detecting the at least one object if the evolution of times series features corresponds to an attenuation.

Advantageously, the method further comprises the step of:
- detecting the at least one person if the evolution of time series features corresponds to a predetermined personal pattern.

Advantageously, the trigger activation is selected in a group consisting of a closing of a door of a vehicle, a key lock, a gesture recognition and a pushing button.

Advantageously, the signal data is a raw signal data or a signal data being filtered or converted.

Advantageously, the signal data is a signal data received from a sensor, such as a radar, a sonar or a camera.

Advantageously, the method comprises the steps of:
- generating spikes from the time series features,
- detecting the at least one object or the at least one person based on the generated spikes.

Advantageously, the method further comprises the step of:
- inputting the generated spikes in a neural network and outputting from the neural network a detection of the at least one object or the at least one person, or
- treating the generated spikes with a support vector machine (SVM), a principal component analysis (PCA), K-means, random forests, a decision tree or a (other) classifier.

Advantageously, the neural network is a spiking neural network (SNN).

Advantageously, the raw signal data has a real part and an imaginary part, and the method further comprises the step of:
- composing time series data based on the real part of the raw signal data received and time series data based on the imaginary part of the raw signal data received.

Advantageously, the method further comprises the steps of:
- recognizing a pattern of generated spikes,
- allocating the pattern of generated spikes to a result of detection.

Advantageously, the method further comprises the step of:
- retrieving, in a data base, supervised or unsupervised patterns linked to object or persons to be detected.

Advantageously, the method further comprises the step of:
- comparing the pattern of generated spikes to the supervised or unsupervised patterns and judge a match or a mismatch of the pattern of generated spikes with the supervised or unsupervised patterns.

Advantageously, an output of the detection step is : a passenger, an adult, a child, a baby, no person on a seat, a cat, a dog, an animal, a bottle and/or an object.

Advantageously, the monitoring device has a first predetermined number of receivers and a second predetermined number of transmitters, and the signal data corresponding to a set of receivers and transmitters is mixed for composing the time series data.

Advantageously, the monitoring device has a first predetermined number of receivers and a second predetermined number of transmitters, and the method further comprises the steps of :
- dividing the signal data into divided signal data for each receiver linked to each transmitter, so as to have a divided set of a third predetermined number of divided signal data, the third predetermined number being equal to the first predetermined number multiplied by the second predetermined number,
- composing the time series data based on the divided signal data.

It is possible to not only detecting objects or persons but also classifying image (scene, etc) or pixels. That is, it is possible to use the present method not only for object or person detection, but also classification, segmentation and other purposes.

Advantageously, the signal data is divided into several groups and the divided set is sent to the corresponding branch.

Advantageously, the transmitter is a radar, preferably sending millimeter waves.

Advantageously, the transmitter is a wireless device emitting waves. It could be a sonar, a lidar, a light emitter or a radio emitter, or any suitable device.

Advantageously, the receiver is arranged to detect the emission of the transmitter and/or the re-emission reflected by the object or person to be detected (or by any other object in the monitored area).

Advantageously, the monitoring device is placed in a vehicle.

Advantageously, the monitoring device is placed in a room of a building.

Advantageously, the monitored area is inside the vehicle.

Advantageously, the object is an occupant of a vehicle such as a driver, a passenger, an animal, a child or a thing such as a child seat.

This allows to detect object in the vehicle, in particular to avoid to leave a child or an animal in the car which is parked for long time in the parking for example. Further, this allows to confirm child (baby) existence even if child seat is installed or not.
It is possible to use a training dataset (radar data + labels (i.e correction, e.g. seat A and C have occupant, which are child)), the neural network can be trained by following the label. A practical example is a follows : the training data set is composed of several hundreds thousands chunks of chirps that contains data from each receiver in liaison with (or belonging to) each transmitter. Then, labels are assigned to each chunks, such as seat A and B is occupied (others are vacant). Addition to that, object is also identified, for example, adult at A, baby at B.

This allows to improve the performance of the method, in terms of accuracy and speed for example.

The radar uses millimeter wave, but after receiving, the data is transformed into digital data, whatever the transmission is.

Millimeter wave is high frequency wave.

That is, we can send a large amount of data, so it is used in data transfer by mobile for example. The higher the frequency is, the higher the resolution is. In contrast, the higher the frequency is, the shorter the transferred distance is. Advantageously, the monitoring device is arranged to monitor indoor.

Advantageously, the monitoring device is arranged to monitor an inside of a vehicle.

Input of SNN is the generated spike derived from time series data. SNN has layers composed of multiple neurons. The spikes are fed to each neuron, as also explained hereafter. Each neuron is preferably corresponding to ID of transmitter and receiver. For example, the spike generated by the signal from "transmitter No.1 and receiver No.3" is sent to corresponding neuron.

Then, output of SNN is detection result such as a passenger, an adult, a child, a baby, no person on a seat, a cat, a dog, an animal, a bottle and an object.

Preferably, inputting in the neural network, in particular the spiking neural network, the divided set is done as follows : inputting in the paired branch of receiver layer and transmitter layer the corresponding divided signal data for each receiver linked to each transmitter.

The SNN, in particular the feature extraction, transforms input data to extract important data and to reduce redundant data for outputting required results.

Therefore, preparing each branch for input from each receiver/transmitter equals to doing feature extraction specific for each receiver/transmitter.

A second aspect of the present invention relates to a monitoring device arranged to implement the computer-implemented method for detecting at least one object or at least one person according to the first aspect.

A third aspect of the present invention relates to a vehicle equipped with a monitoring device according to the previous aspect.

A fourth aspect of the present invention relates to a computer-readable medium comprising instructions which, when executed by a computer, cause the computer to carry out the method of the first aspect.

Other features and advantages of the present invention will appear more clearly from the following detailed description of particular non-limitative examples of the invention, illustrated by the appended drawings where:
- figure 1 represents a radar signal according to a conventional method,
- figure 2 represents schematically a vehicle with some occupants, according to the present invention,
- figure 3 represents a schematic arrangement of a monitoring device and a functioning of the computer-implemented method for detecting at least one object or at least one person according to the present invention,
- figure 4 represents signal data to be processed by the method according to the invention,
- figure 5 represents steps of a computer-implemented method for detecting at least one object or at least one person in the vehicle according to the present invention,
- figure 6 represents signal data processed by the method according to the invention,
- figure 7 represents details of functioning of the spiking neural network.

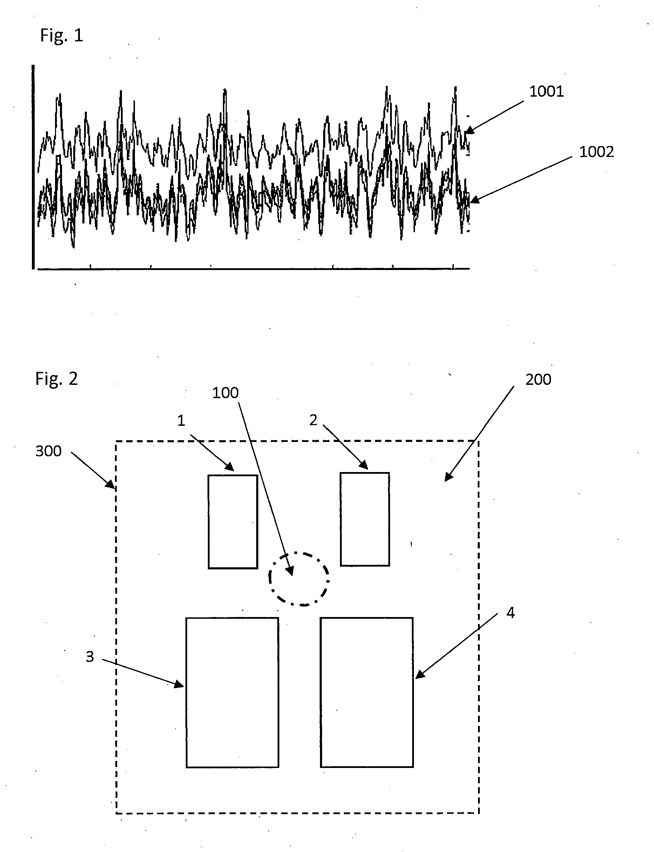

Figure 1 represents a radar signal according to a conventional method.

In the conventional method, it is possible to retrieve movement captured by a sensor, in particular a radar sensor.

However, it is difficult to detect and to conclude with certainty the output of the detection. In the example illustrated in figure 1, a signal 1001 corresponding to a baby has a similar shape compared with a signal 1002 correspond to a bottle with liquid inside, placed on a seat of the vehicle. Without willing to be bound by a theory, it is believed that the water in the (PET) bottle vibrates by impact shock of door closing.

Considering the Child Presence Detection (CPD) system, after closing and/or locking door, it is desired to detect if a baby is left inside vehicle by seeing his movement, however, the vibration of water in the bottle makes misunderstanding that a baby is inside car. That is why there is a need for improvement in comparison to conventional method.

Figure 2 represents schematically a vehicle 300equipped with a monitoring device 100, with some occupants or objects 1, 2, 3, 4, according to the present invention.

For the purpose of illustration only, it could be considered that reference 1 corresponds to a baby, reference 2 corresponds to a child seat, reference 3 corresponds to a first adult and reference 4 corresponds to a second adult. It is because the present invention is particularly useful to detect the presence of a baby 1 left in the car after the driver is getting out of the car, but the present invention can be used for any other detection of person or object.

The monitoring device 100 is arranged to monitor a monitored area 200, wherein a baby 1 to be detected is placed, in particular is left, for safety purpose. The monitoring device 100 may be installed e.g. on a (inner) ceiling of the vehicle 300 in order to monitor the inside of the vehicle 300.

The monitoring device 100 may be placed in the vehicle 300 and the object or person to be detected may be e.g. a person, a child, an animal (such as a dog or a cat or any kind of animal), a child seat, or any type of object, being alive or a thing.

The monitored area 200 may be an inside of the vehicle 300, and the result (or output) of the method could be to detect the presence of the object or person 1 (person, animal, baby, child or thing, etc). Further, the result of the method could be to identify the object or person 1, that is to say to state that the object 1 is a baby, a person, an adult, an animal or a thing, and preferably of which kind. Still further, the result of the method could be to identify where the object or person or baby 1 is, in the monitored area. For example (non-limitative), the result could be "an adult is placed on the right seat on the first row of the car", or "a child is placed on the right seat on the second row of the car", or "a child is placed on the central seat on the second row of the car and is in its child seat" or "a child seat is placed on the left seat on the second row of the car and is empty", "a dog is placed on the left seat of the third row of the car" or "a baby is left in the vehicle".

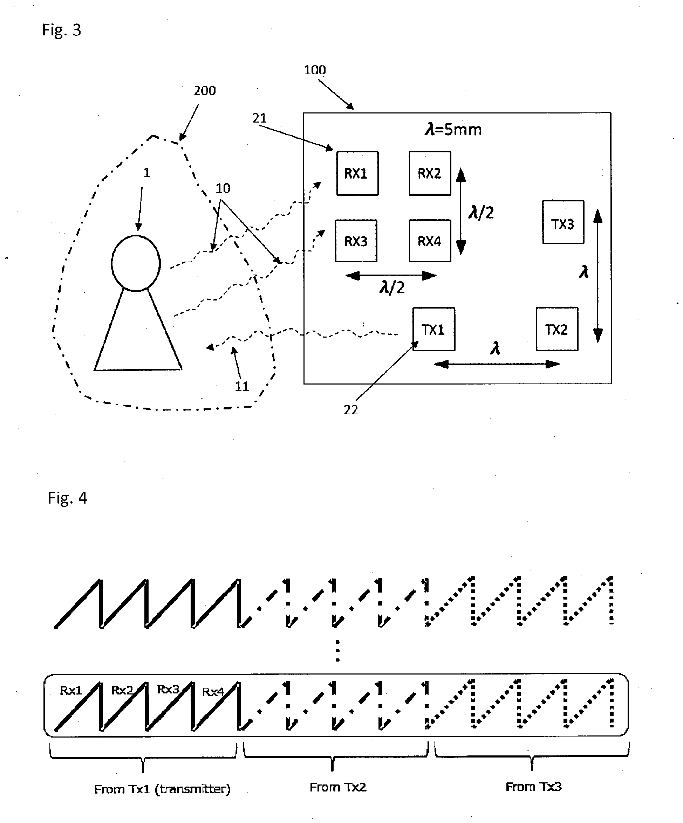

As an illustrative example, the monitoring device 100 may be equipped with receivers (Rx), in particular with a first determined number of receivers, for example four receivers Rx1, Rx2, Rx3, Rx4 and with transmitters Tx, in particular with a second predetermined number of transmitter, for example three transmitters Tx1, Tx2, Tx3. This will be detailed also with respect to figure 3.

The transmitters (Tx) may be spaced apart from a distance lambda (symbol λ). The distance lambda is e.g. 5 mm. The receivers Rx may be e.g. spaced apart from lambda divided by two.

The transmitters Tx emit one or more transmitted waves, which may be reflected by the object 1 as one or more reflected waves. The reflected waves may be received (or captured) by the receivers Rx.

The monitoring device 100 may comprise a computer, a processor, a memory, a control unit, a (radar) sensor and/or a camera.

The monitoring device 100 may be connected to a cloud, a server, a smartphone or the like.

Figure 3 represents a schematic arrangement of the monitoring device and a functioning of the computer-implemented method for detecting at least one object or at least one person 1 according to the present invention.

The monitoring device 100 is arranged to monitor the monitored area 200, wherein at least one object or at least one person 1 to be detected is placed (or may be placed).

The monitoring device 100 may be placed in a vehicle and the object or person 1 may be e.g. a person, an adult, a child, an animal (such as a dog or a cat or any kind of animal), a child seat, or any type of object, being alive or a thing.

The monitored area 200 may be an inside of the vehicle, and the result (or output) of the method could be to detect the presence of the object or person 1 (person, animal or thing, etc). Further, the result of the method could be to identify the object or person 1, that is to say to state that the object or person 1 is a person, a child, a baby, an animal or a thing, and preferably of which kind. Still further, the result of the method could be to identify where the object or person 1 is, in the monitored area 200. For example (non-limitative), the result could be "an adult is placed on the right seat on the first row of the car", or "a child is placed on the right seat on the second row of the car", or "a child is placed on the central seat on the second row of the car and is in its child seat" or "a child seat is placed on the left seat on the second row of the car and is empty" or "a dog is placed on the left seat of the third row of the car".

As an alternative, the monitored area 200 may be also an outside of the vehicle. Thereby, the result (non-limitative) could be "a cyclist is stopped at 100 meters on the left side of the road", or "a pedestrian is moving in the middle of the street, at 25 meters", or "the speed of said pedestrian is 5 km/h", or "the speed of said pedestrian is abnormally high" (compared to usual walking speed), or "a car is moving on the right side of the road", or "a car is moving on the right side of the road in the forward direction".

The monitoring device 100 may be equipped with receivers (Rx or 21), in particular with a first determined number of receivers, for example four receivers Rx1, Rx2, Rx3, Rx4 and with transmitters Tx, in particular with a second predetermined number of transmitter, for example three transmitters Tx1, Tx2, Tx3.

The transmitters 22 (or Tx) may be spaced apart from a distance lambda (symbol λ). The distance lambda is e.g. 5 mm. The receivers Rx may be e.g. spaced apart from lambda divided by two.

The transmitters Tx emit one or more transmitted waves 11, which may be reflected by the object 1 as one or more reflected waves 10. The reflected waves 10 may be received (or captured) by the receivers Rx. The type of signals and raw signal data of the transmitters Tx and the receivers Rx will be explained with more details here after.

Figure 4 represents signal data to be processed by the method according to the invention.

The signal data (upper portion of the figure) is schematically represented as chirps in a (common) frame.

It is possible to have an input nodes that allow to divide the frame in identified chirps with a double reference to the receiver and the transmitter it concerns. For example, it is then possible to identify that the first chirp belongs to the first receiver Rx1 and the first transmitter Tx1 (that is to say signal emitted from the first transmitter Tx1 and reflected to the first receiver Rx1 by the object 1). The same applies for other chirps, e.g. the seventh chirps starting from the left belong to the third receiver Rx3 and the second transmitter Tx2 (that is to say signal emitted from the second transmitter Tx2 and reflected to the third receiver Rx3 by the object 1). That is, the number of chirps is equal to the third predetermined number (i.e. equal to the first predetermined number multiplied by the second predetermined number). In the given example, there are twelve chirps (three transmitters Tx1 to Tx3 multiplied by four receivers Rx1 to Rx4).

It is possible to divide the signal data.

That is, the input nodes allow to individualize the chirps, that is to say to divide the frame into single chirps, as mentioned above. The idea is to detach each chirp, so that each chirp could be sent to corresponding branch of the receiver layer, as further explained hereafter.

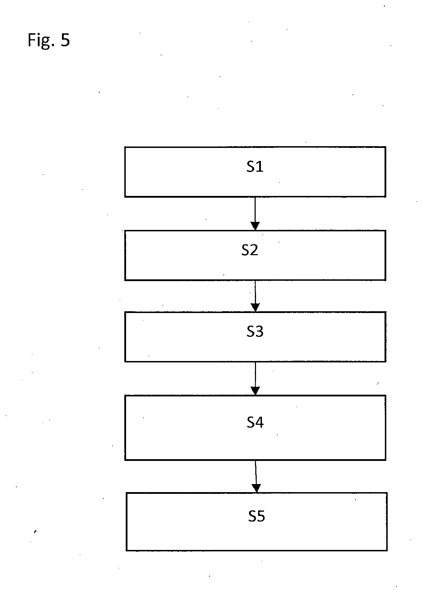

Figure 5 represents steps of a computer-implemented method for detecting at least one object or at least one person 1 in the vehicle 300 according to the present invention.

The computer-implemented method according to the invention, can be used for detecting at least one object or at least one person 1 in the monitored area 200 of the monitoring device 100 (of the vehicle 300).

The method comprising the steps of:
- detecting a trigger activation S1, such as a closing of a door of the vehicle 300,
- receiving signal data S2 from the monitoring device 100,
- composing time series data S3 based on the signal data received,
- extracting times series features S4 from the time series data,
- identifying an evolution of times series features over a predetermined period of time starting with the detected trigger activation,
- detecting S5 the at least one object or the at least one person 1 based on the evolution of times series features.

That is, one of the main points of the present invention is to detect a baby, a child or a pet who is left inside vehicle 300 by using the change of features of radar wave temporal (time series) data, the radar being preferably a millimeter wave radar.

As mentioned, the issue that we want to solve by the present invention is that it is difficult to distinguish a baby or a child from vibrated object such as bottle with liquid inside, by radar sensor. For example, water in (PET) bottle vibrates by impact shock of door closing. Considering Child Presence Detection (CPD) system, after closing and/or locking the door of the vehicle, we want to detect if a baby is left inside vehicle by seeing his movement. However, the vibration of water in the bottle makes us misunderstanding that a baby is inside car.

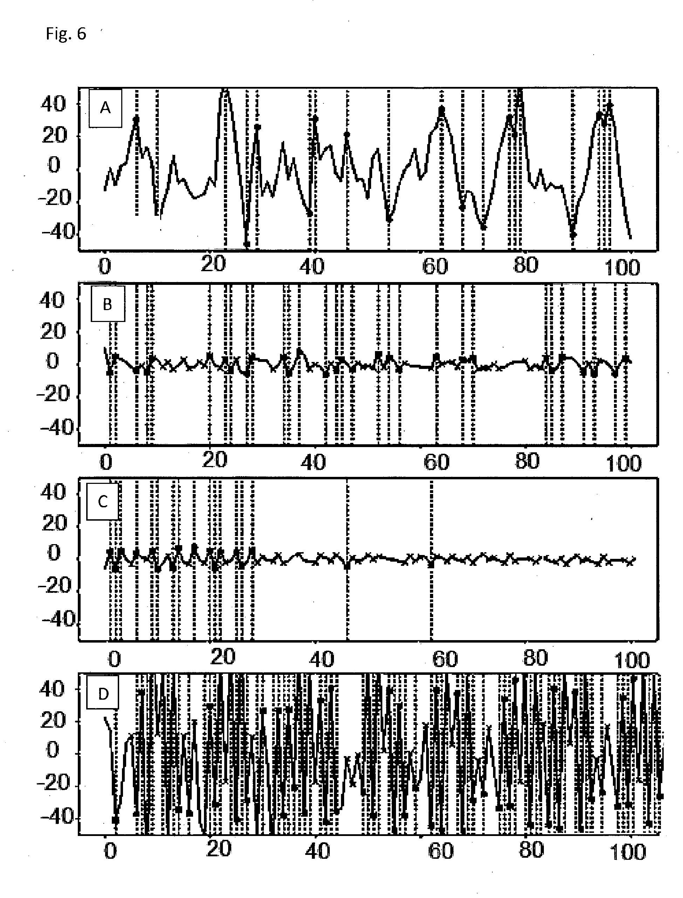

In order to solve the issue, the present invention focus on the change of radar (or other sensor such as sonar) wave features with passing of time. More concretely, attenuation of the vibration helps to distinguish a baby from objects such as bottle with liquid therein. As a method to recognize the attenuation of vibration, it is possible to use spike encoding. This technology generates spike signal when time series data like radar data show something of different behaviour from normal status. Therefore, it is possible to see the attenuation by seeing the timing of generated spike signals, shown in the following Figure 6.

Another point of the present invention is the starting time to check the attenuation, let's say "trigger (of activation)". It is possible to consider several ways to launch this CPD system. One possibility is closing door. This action makes vibration of liquid. In contrast, a baby moves independently from the action. Therefore, it is possible to judge if a moving object is a baby or water by seeing the attenuation just after closing door. As other ways to activate system, we can come up with voice controller, pushing a button, etc. However, the closing door is one of the simplest one because there is no need of additional action required to a driver of the vehicle and it give vibrations.

Figure 6 represents signal data processed by the method according to the invention.

Figure 6 shows a concept of the present invention with an experimental result (generated spikes shown are derived from real radar data).

The idea is to capture the change of features with time passing. The starting trigger of time passing can be as mentioned above, e.g. closing door, turn off engine of the vehicle 300, etc.

The overall process can be :
1/ park car,
2/ exit from car,
3/ close door,
4/ confirm child presence during/after a predetermined period of time such as 10 seconds, 20 seconds, 30 seconds, 1 minute, etc.

After the detection of the trigger, S1, (e.g. closing door), the signal data is received, S2. It is then possible to compose S3 time series data based on the signal data received, and to extract S4 time series features from the time series data.

Then, it is possible to identify an evolution of time series features of the predetermined period of time, and then to detect S5 at least one objection or at least one person 1 based on the evolution of times series features.

Figure 6 shows the evolution of the time series features.

The diagram "A" represents the baby left in the car (baby 1 as schematically represented in figure 2).

The diagram "B" represents an empty seat (e.g. position 4 as schematically represented in figure 2).

The diagram "C" represents a (PET) bottle (e.g. at position 2 as schematically represented in figure 2).

The diagram "D" represents a jerrican (e.g. at position 3 as schematically represented in figure 2).

For the diagram "C", there is attenuation of vibration with passing time, so that a bottle is considered to be detected.

Points in the diagram correspond to peak values that are greater than a predetermined threshold and crosses in the diagrams correspond also to peak values but they are lower than the predetermined threshold. Only in the case of the points (i.e. greater than the predetermined threshold), spikes are generated, which are represented as dashed line in the diagram.

This embodiment is one example. It is also possible to use other features such as trend(s) in time series, and different method to generate spikes other than thresholding. The trend in time series could be extracted from moving average. It is a simple method with good results.

For the diagram "A", there is a steady movement with passing time, so that a baby 1 is considered to be detected, left inside the vehicle. The system may emit a warning (e.g. voice message, sound, light or haptic such as haptic on the key of the vehicle) to highlight the presence of the baby, after the trigger detection.

Table 1 shows a comparison of different kind of sensors for this application.

**Table 1**

| | **mm Wave radar** | **ultrasonic sensor** | **camera** | **pressure sensor** |
|---|---|---|---|---|
| **presence detection** | good (micro motion) | poor | good (image analytics) | poor |
| **lighting environment interference** | good | good | poor | good |
| **position detection** | good | poor | poor | poor |
| **privacy protection** | good | good | poor | good |

Millimeter wave radar is the preferred or best match within the present invention, but it is possible to use other sensors. For example, we can make time series data with ultrasonic sensor (sonar) or camera (vision sensor), then we can apply same methodology (as presented above) to them in order to implement the present invention.

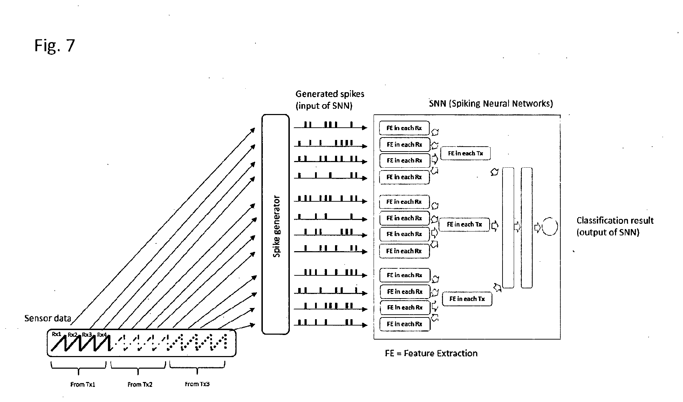

Figure 7 represents details of functioning of the spiking neural network.

The spiking neural network SNN comprises at least one receiver layer (layer A) and at least one transmitter layer (layer B). The SNN may further comprises input nodes and output nodes. The SNN may optionally have an additional layer (layer C) for any purpose.

The receiver layer has a number of feature extraction branches equal to the first predetermined number (of receivers Rx). The transmitter layer has a number of feature extraction branches equal to the second predetermined number (of transmitters Tx).

The input nodes is arranged to divide signal data from the monitoring device 100, in particular from the receivers Rx, into divided signal data. That is, the input nodes are arranged to divide the signal data into divided signal data for each receiver Rx and linked to each transmitter Tx, so as to have a divided set of a third predetermined number of divided signal data, the third predetermined number being equal to the first predetermined number multiplied by the second predetermined number. The division of the signal data has been explained before. The divided set (of signal data) is inputted to the receiver layer for processing.

The receiver layer processes the divided set of signal data, in particular for denoising of the data, while running feature extraction (FE), with a training. The transmitter layer processes the processed data from the receiver layer, while running feature extraction. It is possible also to correct the computation of angle by grouping correctly the signal from transmitters. The processed data from the transmitter layer is sent to the next layer (layer C) which is a fully connected one, and then finally sent to the output nodes.

The output nodes may have for example two branches (without being limited to such number) and finalize the results to be outputted by the SNN (e.g. class 1, class 2, class 3, passenger on seat number 1, baby, child, adult, bottle, thing, etc). This could be for example a cleaning of the results. For example, the transmitter layer (layer B) outputs some probabilities of results and the output nodes concludes with a result.

The divided set of each chirp corresponding to each receiver Rx and each transmitter Tx is inputted in the receiver layer, at the level of the corresponding one branch. Then, the processed data from the receiver layer are inputted in the transmitter layer, at the level of the corresponding branch. The output from the transmitter layer is then sent to the output nodes, for outputting a clear result.

In input nodes as discussed before, each divided data (chirp) is inputted into each branch.

From the implementation point of view, it is necessary to prepare one or multiple nodes on the edge of each branch. In the present case, a preferred embodiment is to prepare one node on the edge of each branch, which is for inputting generated spike signal.

In a preferred embodiment, each signal will pass both layers, it means each signal has to have two class attributions.

That is, the first point is to avoid the mixing signals from different transmitters, it means we want to use attribution of Tx (and Rx). Further, the second point is to deal with signals in each Rx for precise angle computation.

That is, dealing with two attributions is necessary for angle computation.

A phase difference between reflected signal to the first receiver Rx1 and to the second receiver Rx2 can happen. Phase difference may be computed by using signals from same transmitter and at different receivers. So if we consider this computation in SNN, two attributions (Tx and Rx info) are necessary.

Finally, in other words, the prior art deals with all data as same and input all data at once without clear separation. The present invention has better performances by differentiating the layers in dependency of the structure of the hardware (such as numbers of receivers and number of transmitters), with receiver layer having the number of feature extraction branches equal to the number of receivers, and transmitter layer having the number of feature extraction branches equal to the number of transmitters, and by using SNN.

It is of course understood that obvious improvements and/or modifications for one skilled in the art may be implemented, still being under the scope of the invention as it is defined by the appended claims.

## Claims

1. A computer-implemented method for detecting at least one object or at least one person (1) in a monitored area (200) of a monitoring device (100),
the method comprising the steps of:
- detecting a trigger activation (S1), such as a closing of a door of a vehicle (300),
- receiving signal data (S2) from the monitoring device (100),
- composing time series data (S3) based on the signal data received,
- extracting times series features (S4) from the time series data,
- identifying an evolution of times series features over a predetermined period of time starting with the detected trigger activation,
- detecting (S5) the at least one object or the at least one person (1) based on the evolution of times series features.

2. The computer-implemented method according to claim 1,
wherein the method further comprises the step of :
- detecting (S5) the at least one object if the evolution of times series features corresponds to an attenuation.

3. The computer-implemented method according to claim 1,
wherein the method further comprises the step of :
- detecting (S5) the at least one person if the evolution of time series features corresponds to a predetermined personal pattern.

4. The computer-implemented method according to any one of the preceding claims, wherein the trigger activation is selected in a group consisting of a closing of a door of a vehicle (300), a key lock, a gesture recognition and a pushing button.

5. The computer-implemented method according to any one of the preceding claims, wherein the signal data is a signal data received from a sensor, such as a radar, a sonar or a camera.

6. The computer-implemented method according to any one of the preceding claims, the method comprising the steps of:
- generating spikes from the time series features,
- detecting (S5) the at least one object or the at least one person based on the generated spikes.

7. The computer-implemented method according to the preceding claim, wherein the method further comprises the step of:
- inputting the generated spikes in a neural network and outputting from the neural network a detection of the at least one object or the at least one person, or
- treating the generated spikes with a support vector machine (SVM), a principal component analysis (PCA), K-means, random forests, a decision tree or a classifier.

8. The computer-implemented method according to the preceding claim, wherein the neural network is a spiking neural network (SNN).

9. The computer-implemented method according to any one of the preceding claims in their dependency to claim 6, wherein the method further comprises the steps of :
- recognizing a pattern of generated spikes,
- allocating the pattern of generated spikes to a result of detection.

10. The computer-implemented method according to the preceding claim, wherein the method further comprises the step of :
- retrieving, in a data base, supervised or unsupervised patterns linked to object or persons to be detected.

11. The computer-implemented method according to the preceding claim, wherein the method further comprises the step of:
- comparing the pattern of generated spikes to the supervised or unsupervised patterns and judge a match or a mismatch of the pattern of generated spikes with the supervised or unsupervised patterns.

12. The computer-implemented method according to any one of the preceding claims, wherein an output of the detection step is :
a passenger, an adult, a child, a baby, no person on a seat, a cat, a dog, an animal, a bottle and/or an object.

13. The computer-implemented method according to any one of the preceding claims, wherein the monitoring device has a first predetermined number of receivers and a second predetermined number of transmitters, and wherein the signal data corresponding to a set of receivers and transmitters is mixed for composing the time series data.

14. The computer-implemented method according to any one of the preceding claims, wherein the monitoring device has a first predetermined number of receivers and a second predetermined number of transmitters, and wherein the method further comprises the steps of :
- dividing the signal data into divided signal data for each receiver linked to each transmitter, so as to have a divided set of a third predetermined number of divided signal data, the third predetermined number being equal to the first predetermined number multiplied by the second predetermined number,
- composing the time series data based on the divided signal data.

15. A computer-readable medium comprising instructions which, when executed by a computer, cause the computer to carry out the method of claims 1 to 14.
